## Europäisches Patentamt

(19) **European Patent Office**

**Office européen des brevets**

(11) Veröffentlichungsnummer: **0 152 092**
**B1**

(12) # EUROPÄISCHE PATENTSCHRIFT

(45) Veröffentlichungstag der Patentschrift:
03.06.87

(51) Int. Cl.⁴: **H 01 H 3/24**

(21) Anmeldenummer: **85101464.7**

(22) Anmeldetag: **12.02.85**

(54) **Sitzkontaktschalter für Kraftfahrzeugsitze.**

(30) Priorität: **16.02.84 DE 3405458**

(73) Patentinhaber: **BAYERISCHE MOTOREN WERKE Aktiengesellschaft, Postfach 40 02 40 Petuelring 130 - AJ-36, D-8000 München 40 (DE)**

(43) Veröffentlichungstag der Anmeldung:
**21.08.85 Patentblatt 85/34**

(72) Erfinder: **Lobe, Hartwig, Primelstrasse 30, D-8039 Puchheim (DE)**

(45) Bekanntmachung des Hinweises auf die Patenterteilung:
**03.06.87 Patentblatt 87/23**

(74) Vertreter: **Dexheimer, Rolf, Bayerische Motoren Werke Aktiengesellschaft Postfach 40 02 40 Petuelring 130 - AJ-21, D-8000 München 40 (DE)**

(84) Benannte Vertragsstaaten:
**FR GB IT SE**

(56) Entgegenhaltungen:
**DE - B - 1 081 956**
**DE - C - 890 319**
**US - A - 3 417 215**
**US - A - 3 704 352**

EP 0 152 092 B1

## Beschreibung

Die Erfindung betrifft einen Sitzkontaktschalter für Kraftfahrzeugsitze, entsprechend dem Oberbegriff des Hauptanspruchs.

Ein derartiger Sitzkontaktschalter ist aus der US-A-3 704 352 bekannt, der im Sitzkissen eines Fahrzeugsitzes unterhalb der Sitzfläche in der Fläche verteilte Kontaktelemente aufweist, von denen jeweils zwei mit einem freien Abstand übereinander angeordnete sind. Nachteilig ist, dass dieser Sitzschalter bereits beim Abstellen eines Gegenstandes im Bereich wenigstens eines Kontaktelementpaares durch das Zusammendrücken des Sitzpolsters bis zum Schliessen der Kontaktelemente das falsche Signal hervorruft, dass der Sitz von einer Person besetzt ist. Dadurch ausgelöste Massnahmen, wie das Ausfahren einer Kopf- bzw. Armstütze oder das Ertönen eines akustischen Signals, sind unerwünscht und können sich als störend erweisen. Ein weiterer Nachteil ist, dass die Sitzfläche durch einen derartigen Sitzschalter sowohl in der Fläche, als auch örtlich vor und nach dem Schliessen der Kontaktelemente unterschiedlich nachgiebig ist. Um den Sitzkomfort durch die verhältnismässig steifen Einzelelemente nicht überflüssig zu beeinträchtigen, ist ein entsprechend dickes Sitzpolster erforderlich.

Die in der US-A-3 417 215 als luftgefülltes Polster ausgebildete Fussmatte, die beim Betreten das Einschalten einer mit dem Polster verbundenen Schalteinrichtung der Haustürbeleuchtung bewirkt, kann zwar als Sitzkontaktschalter verwendet werden, dieser kann jedoch ebenfalls beim Abstellen eines Gegenstandes auf der Sitzfläche einen unerwünschten Schaltvorgang auslösen. Die Matte ist mit Luft gefüllt, die lediglich Umgebungsdruck aufweist. Dadurch kann die Matte leicht an einzelnen Stellen zusammengedrückt werden, wodurch sich in diesem Fall die Federung der Sitzfläche entsprechend vermindert.

Aufgabe der Erfindung ist es, einen Sitzkontaktschalter für Kraftfahrzeugsitze nach dem Oberbegriff des Hauptanspruchs anzugeben, der einfach im Aufbau und zuverlässig in der Anwendung ist und der erst ab einer bestimmten grossflächigen Belastung des Sitzes einen Schaltvorgang hervorruft.

Diese Aufgabe ist dadurch gelöst, dass der Druckgeber ein abgeschlossenes, elastisch deformierbares, mit einem fliessfähigen Medium gegenüber dem Umgebungsdruck mit Überdruck gefülltes flaches Polster ist, das sich annähernd über die gesamte Sitzfläche erstreckt und das in Kammern unterteilt ist, die teils untereinander und mit dem Druckmesser und teils ausschliesslich untereinander in Verbindung stehen. Besonders vorteilhaft ist, dass durch die Aufteilung des Polsters in derartige Kammern und durch eine entsprechende Anordnung derselben erreicht wird, dass ein Schaltvorgang erst ab einer bestimmten grossflächigen Belastung nur von einer auf dem Sitz befindlichen Person ausgelöst wird. Die Kammern können ausserdem unterschiedliche Drücke aufweisen und der Flächenbelastung des Sitzes angepasst sein. Mit einem derartigen Sitzkontaktschalter lässt sich der Sitzkomfort eines Fahrzeugsitzes wesentlich erhöhen.

Zweckmässige Ausgestaltungen der Erfindung sind Gegenstand von Unteransprüchen.

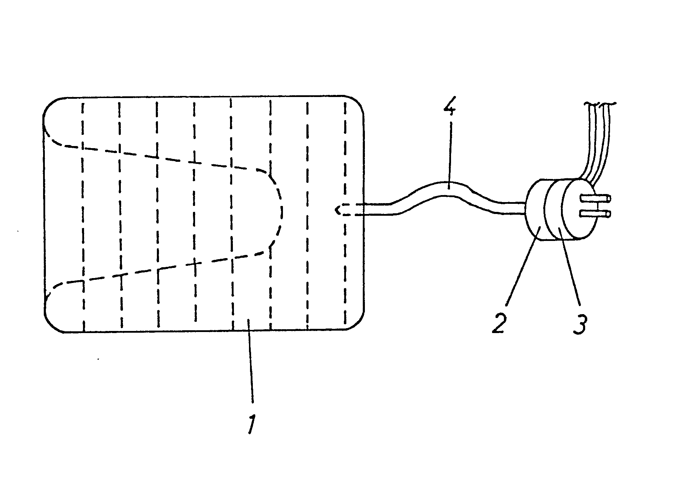

Im folgenden wird ein Ausführungsbeispiel der Erfindung anhand der Zeichnung näher erläutert. Diese zeigt eine perspektivische Ansicht des Sitzkontaktschalters im ausgebauten Zustand.

In der Zeichnung ist ein Sitzkontaktschalter dargestellt, der im wesentlichen aus einem Polster 1, einem Druckmesser 2 und einer Schalteinrichtung 3 besteht. Das Polster 1 stellt den Druckgeber dar und befindet sich in Gebrauchslage oberhalb oder kurz unterhalb der Oberseite des Sitzteiles eines Fahrzeugsitzes. Es ist über eine Leitung 4 mit dem Druckmesser 2 verbunden, der nach Überschreitung eines bestimmten Druckes im Polster 1 die an den Druckmesser 2 angrenzende Schalteinrichtung 3 betätigt. Der Druckmesser 2 könnte aber auch ohne Leitung mit dem Polster 1 verbunden sein. In der Zeichnung ist durch Strichlinien angedeutet, dass das Polster 1 in einzelne Kammern unterteilt ist, die untereinander und mit dem Druckmesser 2 in Verbindung stehen. Noch vorteilhafter ist es, wenn das Polster 1 in solche einzelnen Kammern unterteilt wird, die separat abgeschlossen oder untereinander in Verbindung stehen, aber nicht mit dem Druckmesser 2 verbunden sind und in solche Kammern, die untereinander und mit dem Druckmesser 2 verbunden sind. Die erstgenannten Kammern dienen vorwiegend dem Sitzkomfort und gestatten eine Anpassung an die unterschiedliche Sitzbelastung, während die letztgenannten Kammern so angeordnet werden können, dass sie sicherstellen, dass eine Änderung der Schaltstellung des Druckschalters nur von einer auf dem Sitz platzgenommenen Person bewirkt wird.

## Patentansprüche

1. Sitzkontaktschalter für Kraftfahrzeuge, der eine Schalteinrichtung (3), einen dem Sitzteil zugeordneten Druckgeber und einen Druckmesser (2) aufweist, der ab einem bestimmten, von dem Druckgeber gelieferten Druck den Sitzkontaktschalter betätigt, dadurch gekennzeichnet, dass der Druckgeber ein abgeschlossenes, elastisch deformierbares, mit einem fliessfähigen Medium gegenüber dem Umgebungsdruck mit Überdruck gefülltes flaches Polster (1) ist, das sich annähernd über die gesamte Sitzfläche erstreckt und das in Kammern unterteilt ist, die teils untereinander und mit dem Druckmesser (2) und teils ausschliesslich untereinander in Verbindung stehen.

2. Sitzkontaktschalter nach Anspruch 1, dadurch gekennzeichnet, dass das Polster (1) mit Luft gefüllt ist.

## Claims

1. A seat contact switch for motor vehicles, comprising a switch device (3), a pressure detector associated with the seat part and a pressure meter (2) which, at or above a specific pressure supplied by the pressure detector, actuates the seat contact switch, characterised in that the pressure detector is a closed, elastically-deformable flat cushion (1) filled with a flowable medium at a pressure in excess of ambient pressure, which cushion extends substantially over the entire seat area and is divided into chambers some of which are in communication with one another and with the pressure meter (2) and some of which are in communication exclusively with one another.

2. A seat contact switch according to Claim 1, characterised in that the cushion (1) is filled with air.

### Revendications

1. Interrupteur à contact de siège pour véhicules automobiles, qui présente un dispositif à interrupteur (3), un émetteur de pression correspondant à l'assise et un manomètre (2) qui, à partir d'une pression déterminée, fournie par l'émetteur de pression, actionne l'interrupteur à contact de siège, caractérisé en ce que l'émetteur de pression est un coussin plat (1) fermé, élastiquement déformable, qui est rempli d'un élément fluide en surpression par rapport à la pression ambiante, qui sétend approximativement sur toute la surface de l'assise et qui est divisé en chambres qui sont en liaison partiellement entre elles et avec le manomètre (2) et partiellement uniquement entre elles.

2. Interrupteur à contact de siège selon la revendication 1, caractérisé en ce que le coussin plat (1) est rempli d'air.

0 152 092